# EUROPÄISCHE PATENTANMELDUNG

(11) **EP 1 873 419 A1**
(43) Veröffentlichungstag der Anmeldung: **02.01.2008**
(21) Anmeldenummer: 07009656.5
(22) Anmeldetag: 15.05.2007
(51) Int. Cl.: F16F 1/373, F16F 1/42

(54) **Elastomerlager**

(30) Priorität: 28.06.2006 DE 102006030085; 31.08.2006 DE 102006040907
(71) Anmelder: ESZ Wilfried Becker GmbH, 41564 Kaarst-Büttgen (DE)
(72) Erfinder: Schneider, Horst, 42489 Wülfrath (DE)
(74) Vertreter: Christophersen & Partner

(57) **Zusammenfassung**

Elastomerlager zur Schwingungs- und Körperschallisolation und zur Entkopplung von Masse-Feder-Systemen für Maschinen, Gebäude, deren Teile, Brücken, Schienenfahrwege und andere Bauten aus einstückig geformten oberen (1) und unteren (2) Deckschichten und sie verbindenden, mehrfach entgegengesetzt gewölbten Federwänden (3,4).

## Beschreibung

Die Erfindung betrifft ein Elastomerlager zur Schwingungs- und Körperschallisolation und zur Entkopplung von Masse-Feder-Systemen für Maschinen, Gebäude, deren Teile, Brücken, Schienenfahrwege und andere Bauten.

Ein Elastomerlager, das aus einer oberen Deckschicht, einer unteren Deckschicht und dazwischen angeordneten, die Deckschichten verbindenden, gewölbten Federwänden besteht, ist aus dem deutschen Gebrauchsmuster 20 2004 020 145 U1 derselben Anmelderin bekannt.

Dieses Elastomerlager hat sich bewährt, ist jedoch für bestimmte Anwendungsfälle verbesserungsfähig. Das bekannte Elastomerlager hat im Hauptbelastungsbereich in der ersten Hälfte einen degressiven Verlauf, durch den die sich unter zunehmender Belastung einstellenden Eigenfrequenzen überproportional kleiner werden, da die Federkonstante C im degressiven Bereich über der Belastung abnimmt und die Masse m über der Belastung zunimmt, wobei die Eigenfrequenz w = √C/m ist. Dies liegt daran, dass sich die gewölbten Federwände des bekannten Elastomerlagers unter steigender Belastung mit einem verhältnismäßig großen Biegeverformungsanteil verformen, der für die Degression der Federkennlinie verantwortlich ist. Des Weiteren ist die Quersteifigkeit des bekannten Elastomerlagers auf Grund der relativ langen Federwände, die in Querrichtung der Querbelastung nur einen geringen Widerstand entgegensetzen, verhältnismäßig klein.

Der Erfindung liegt die Aufgabe zu Grunde, ein Elastomerlager zur Verfügung zu stellen, mit dem sich ein weitgehend linearer Kennlinienbereich einstellen lässt, um die Nachteile der mit einer degressiven Kennlinie verbundenen kleiner werdenden Eigenfrequenzen wesentlich zu verbessern , sowie des Weiteren ein Elastomerlager zur Verfügung zur stellen, mit dem sich ein leicht progressiver bis größer werdender progressiver Kennlinienverlauf einstellen lässt, um möglichst nährungsweise konstante Eigenfrequenzen bei veränderten Belastungen zu erreichen.

Ausgehend von dieser Aufgabenstellung wird ein Elastomerlager zur Schwingungs- und Körperschallisolation und zur Entkopplung von Masse-Feder-Systemen für Maschinen, Gebäude, deren Teile, Brücken, Schienenfahrwege und andere Bauten vorgeschlagen, das aus einstückig geformten oberen und unteren Deckschichten und sie verbindenden, mehrfach entgegengesetzt gewölbten Federwänden besteht.

Benachbarte Federwände können spiegelbildlich gegeneinander gewölbt sein.

In der einfachsten Ausführungsform können die Federwände S-förmig entgegengesetzt gewölbt sein, können jedoch vorzugsweise dreifach entgegengesetzt gewölbt sein. Auch zweifach oder mehr als dreifach entgegengesetzte Wölbungen sind möglich.

Dabei können die Wölbungen der Federwände unterschiedliche Radien aufweisen, wobei die der einen Deckschicht benachbarte Wölbung einen größeren Radius als die der anderen Deckschicht benachbarte Wölbung aufweist und die diese Wölbungen verbindende, entgegengesetzt gerichtete Wölbung einen kleineren Radius als die beiden anderen Wölbungen aufweist.

Die Verbindungspunkte der Federwände mit der einen Deckschicht und die Verbindungspunkte der Federwände mit der anderen Deckschicht können jeweils paarweise unterschiedlich beabstandet sein. Zur Einstellung der Federkennlinie ist es bevorzugt, wenn sich die Wölbung mit dem größten Radius über einen kleineren Kreiswinkel als die Wölbungen mit den kleineren Radien erstreckt. Dabei kann sich die Wölbung mit dem größten Radius vorzugsweise über einen Kreiswinkel von 120° und die Wölbung mit den kleineren Radien über einen Kreiswinkel von etwa 180° erstrecken.

Zum Einstellen der gewünschten Federkennlinie dient auch eine Anordnung nach der die Verbindungspunkte der den größten Radius aufweisenden Wölbungen mit der benachbarten Deckschicht jeweils paarweise einen kleineren Abstand als die Verbindungspunkte der den kleineren Radius aufweisenden Wölbungen mit deren benachbarter Deckschicht aufweisen. Zusätzlich können auch die Wandstärken der einzelnen Wölbungen unterschiedlich sein, wobei bevorzugterweise die Wandstärke der Federwände von der einen Deckschicht zur anderen Deckschicht hin abnimmt bzw. die Wandstärke der Federwände von den Deckschichten zur Mitte hin abnimmt.

Die Wölbungen der Federwände sollen so bemessen sein, dass unter zunehmender Belastung zunächst die Wölbungen mit dem kleinsten Radius, danach die Wölbungen mit dem nächst größeren Radius und schließlich die Wölbungen mit dem größten Radius bis zur Anlage verformt werden. Hierdurch werden der progressive Teil der Federkennlinie und/oder die Erhöhung der Quersteifigkeit bewirkt.

Die eingangs erwähnte Aufgabe wird des Weiteren durch die Verwendung des vorstehend definierten Elastomerlagers zur Schwingungs- und Körperschallisolation und zur Entkopplung von Masse-Feder-Systemen für Maschinen, Gebäude, deren Teile, Brücken, Schienenfahrwege und andere Bauten gelöst.

Mit dem erfindungsgemäßen Elastomerlager lässt sich das Verhältnis der Vertikal- zur Quersteifigkeit nahezu beliebig gestalten, was für Masse-Feder-Systeme wichtig ist. Des Weiteren lässt sich die Dämmwirkung auch bei Querbelastung, zum Beispiel bei Kurvenfahrten auf Schienenfahrwegen in Folge von Fliegkräften günstiger anpassen. Demgegenüber ist bei bekannten Flächenlagern, die als vollvolumige Teile oder Schaumteile ausgebildet sind, das Verhältnis von Vertikalsteifigkeit zur Quersteifigkeit bei einer geforderten Vertikalsteifigkeit nicht so flexibel gestaltet, da eine bestimmte Lagerhöhe eine davon abhängige Quersteifigkeit zur Folge hat.

Mit dem erfindungsgemäßen Elastomerlager mit mehrfach übereinander gewölbten Federwänden lässt sich dagegen die Quersteifigkeit bei einer definierten Höhe und einer geforderten Vertikalsteifigkeit über die Parameter Höhe, Dicke, Wölbung und Anzahl der Federwände fast beliebig einstellen.

Das erfindungsgemäße Elastomerlager nimmt Unebenheiten des Untergrundes beim Belegen mit Beton und Schüttgütern, zum Beispiel Schotter bei einem Schienenfahrweg ohne Veränderung der Steifigkeit über den gesamten Hauptbelastungsbereich auf, wodurch auch die Eigenfrequenz des Systems nicht beeinträchtigt wird, da das erfindungsgemäße Elastomerlager Unebenheiten, selbst spitze Eindrücke von Schotter und ähnlichem Schüttgut ohne nennenswerte Verformung der Federwände aufnehmen kann. Demgegenüber wird bei vollvolumigen Flächenlagern und Schaumlagern durch das Aufnehmen der Unebenheiten die Steifigkeit und Federkennlinie erheblich beeinträchtigt und somit die Eigenfrequenz entsprechend verändert, was partiell oder auch in größeren Flächenbereichen zu Schallbrücken führt, wodurch die Dämmung, die Körperschalldämmung und das Schwingungsverhalten mehr oder weniger stark beeinträchtigt werden.

Die Erfindung wird nachstehend anhand mehrerer Ausführungsbeispiele des näheren erläutert. In der Zeichnung zeigen:
- Fig. 1: eine erste Ausführungsform des erfindungsgemäßen Elastomerlagers,
- Fig. 2: eine zweite Ausführungsform des erfindungsgemäßen Elastomerlagers,
- Fig. 3: das Elastomerlager gemäß Figur 2 unter Belastung,
- 4.1. bis 4.3: Varianten einer dritten Ausführungsform des erfindungsgemäßen Elstomerlagers und
- Fig. 5: die Federkennlinien des erfindungsgemäßen Elastomerlagers und des Elastomerslagers entsprechend dem deutschen Gebrauchsmuster 20 2004 020 145 U1.

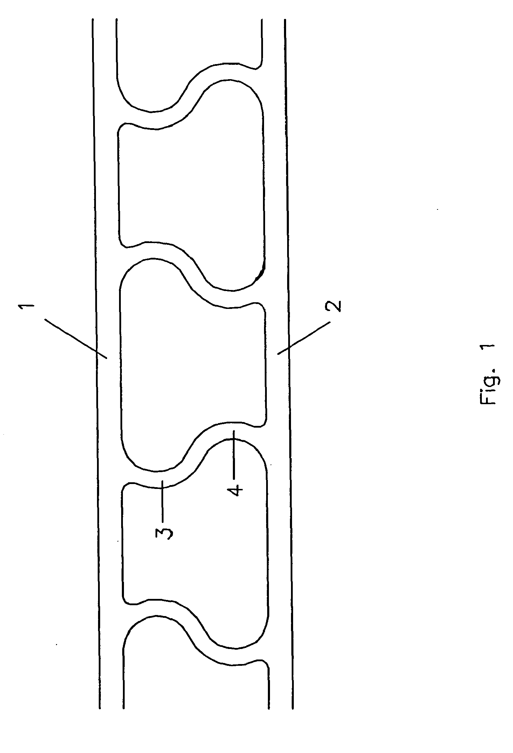

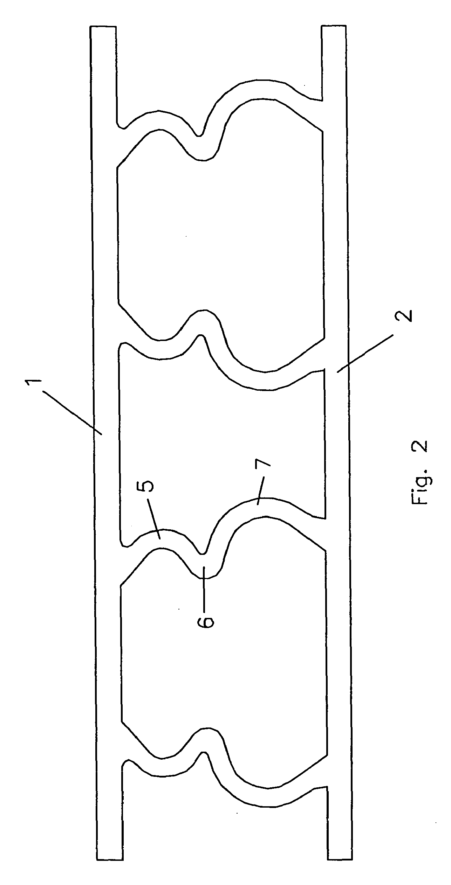

Aus Fig. 1 ist ersichtlich, dass das Elastomerlager eine erste Deckschicht 1 und eine zweite Deckschicht 2 aufweist, die miteinander durch Federwände 3, 4 verbunden sind. Jede Federwand weist entgegengesetzt gerichtete Wölbungen 3, 4 auf, die im Beispiel der Fig. 1 S-förmig verlaufen. Es ist ersichtlich, dass die Verbindungspunkte der gegeneinander gerichteten Wölbungen 3 mit der Deckschicht 1 einen geringeren Abstand aufweisen als die Verbindungspunkte der entgegengesetzt gerichteten Wölbungen 4 mit der Deckschicht 2. Hierdurch lässt sich das Einfederungsverhalten und damit die Federkennlinie nach Wunsch beeinflussen. Bei der Ausführungsform gemäß Fig. 1 weisen die Wölbungen 3, 4 gleiche Radien auf.

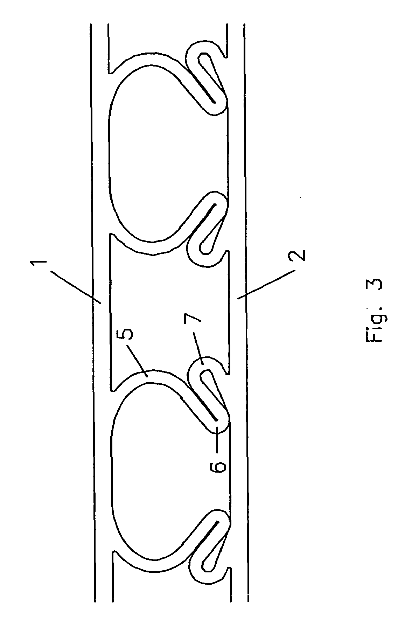

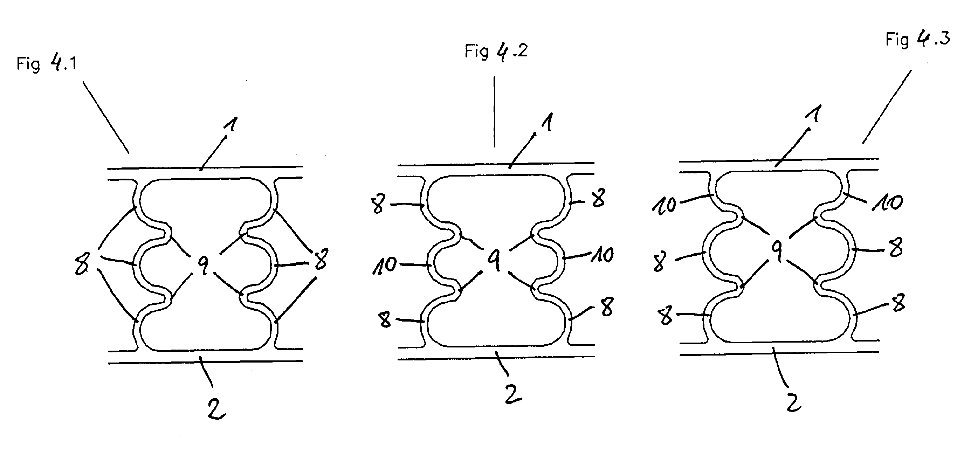

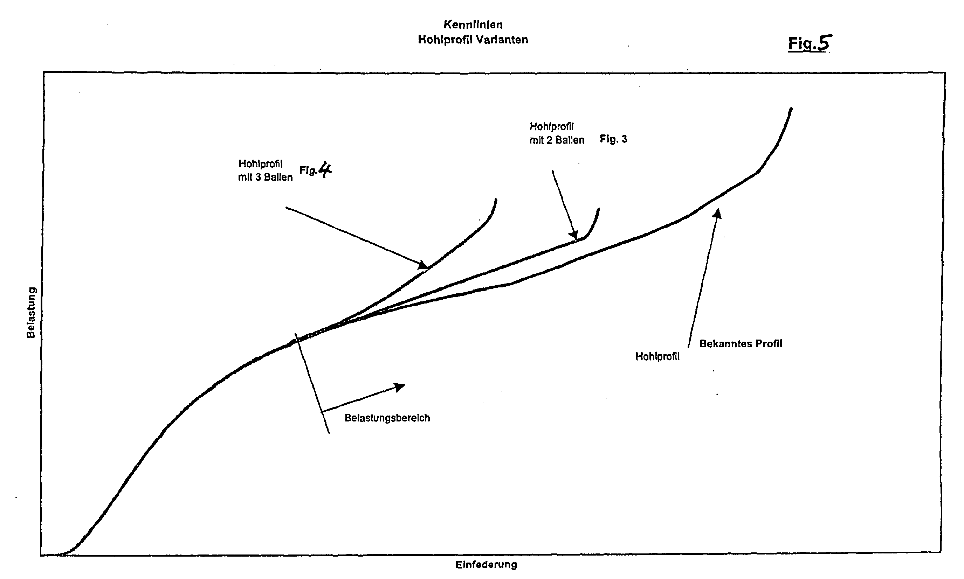

Die Ausführungsform gemäß Fig. 2 zeigt Federwände, die dreifach gewölbt sind, wovon die mit den Deckschichten 1, 2 verbundenen Wölbungen 5, 7 gleich gerichtet und die diese verbindende Wölbung 6 entgegengesetzt gerichtet ist. Diese Wölbung 6 weist den kleinsten Krümmungsradius auf, während die Wölbung 5 den größten Radius aufweist und die Wölbung 7 dazwischen liegt. Bei einer Verformung unter Last kommen die Wölbungen 6 und 7 gemäß Fig. 3 als erstes aneinander zur Anlage und stützen sich an der Deckschicht 2 ab. Erst danach wird auch die Wölbung 5 wesentlich verformt.

Die Ausführungsform gemäß Fig. 4 zeigt Federwände, die fünffach gewölbt sind. Davon sind die mit den Deckschichten 1, 2 verbundenen Wölbungen und die mittleren Wölbungen 8, 10 gleich gerichtet, während die diese verbindenden Wölbungen 9 entgegengesetzt gerichtet sind. Die Variante 4.1 weist drei gleich gerichtete Wölbungen mit etwa gleichem Krümmungsradius auf, während die entgegengesetzt gerichteten Wölbungen 9 einen sehr viel kleineren Radius aufweisen. Bei der Variante gemäß 4.2 weist die mittlere Wölbung 10 einen kleineren Krümmungsradius als die äußeren Wölbungen 8 auf, während bei der Variante gemäß 4.3 eine mit der Deckschicht 2 oder 1 verbundene Wölbung 8 und die mittlere Wölbung 8 etwa den gleichen Krümmungsradius aufweisen, während die mit der Deckschicht 1 bzw. 2 verbundene Wölbung 10 einen kleineren Krümmungsradius aufweist.

Aus Figur 5 sind die Federkennlinien der Ausführungsformen gemäß Fig. 2 und 4 sowie des Elastomerlagers entsprechend dem deutschen Gebrauchsmuster DE 20 2004 020 145 U1 ersichtlich. Die Federkennlinie der Ausführungsform gemäß Fig. 2 besteht aus einem linearen Bereich, der den Hauptbelastungsbereich abdeckt und geht dann in einen progressiven Bereich über. Die Federkennlinie der Ausführungsform gemäß Fig. 4 verläuft im Belastungsbereich rein progressiv. Zum Vergleich ist die Federkennlinie der bekannten Elastomerfeder eingezeichnet, deren progressiver Bereich bei sehr viel größerer Einfederung beginnt und dann steiler verläuft.

Die Wölbungen 3, 4, 5, 6, 7, 8,. 9, 10 können je nach den Anforderungen unterschiedliche Wandstärken aufweisen. Ebenso ist es möglich, die Wandstärke von einer Deckschicht 1 zur anderen Deckschicht 2 zu oder abnehmen zu lassen oder auch von den Deckschichten 1, 2 aus zur Mitte hin ab- oder zunehmen zu lassen.

Die Belastbarkeit des erfindungsgemäßen Elastomerlagers lässt sich von 0,01 Nmm⁻² bis etwa 1,0 Nmm⁻² einstellen, was einer Belastbarkeit von einer Tonne je Quadratmeter bis 100 Tonne je Quadratmeter entspricht, so dass sich das erfindungsgemäße Elastomerlager zur Schwingungs- und Körperschallisolation und zur Entkopplung von Masse-Feder-Systemen für Maschinen, Gebäude, deren Teile, Brücken, Schienenfahrwege und andere Bauten verwenden lässt und sich dabei vollflächig oder streifenförmig unter den Bauten anordnen lässt, wobei sich eine gleichmäßige Quersteifigkeit in alle Richtungen durch schachbrettartiges Verlegen einzelner Elastomerlagerelemente erreichen lässt.

## Patentansprüche

1. Elastomerlager zur Schwingungs- und Körperschallisolation und zur Entkopplung von Masse-Feder-Systemen für Maschinen, Gebäude, deren Teile, Brücken, Schienenfahrwege und andere Bauten aus einstückig geformten oberen und unteren Deckschichten und sie verbindenden, mehrfach entgegengesetzt gewölbten Federwänden.

2. Elastomerlager nach Anspruch 1, bei der benachbarte Federwände spiegelbildlich gegeneinander gewölbt sind.

3. Elastomerlager nach Anspruch 1 oder 2, bei dem die Federwände S-förmig entgegengesetzt gewölbt sind.

4. Elastomerlager nach Anspruch 1 oder 2, bei dem die Federwände dreifach entgegengesetzt gewölbt sind.

5. Elastomerlager nach einem der Ansprüche 1 bis 4, bei dem die Wölbungen der Federwände unterschiedliche Radien aufweisen.

6. Elastomerlager nach Anspruch 4 und 5, bei dem die der einen Deckschicht benachbarte Wölbung einen größeren Radius als die der anderen Deckschicht benachbarte Wölbung aufweist und die diese Wölbungen verbindende, entgegengesetzt gerichtete Wölbung einen kleineren Radius als die beiden anderen Wölbungen aufweist.

7. Elastomerlager nach Anspruch 6, bei dem die Verbindungspunkte der Federwände mit der einen Deckschicht und die Verbindungspunkte der Federwände mit der anderen Deckschicht jeweils paarweise unterschiedlich beabstandet sind.

8. Elastomerlager nach Anspruch 6 oder 7, bei dem sich die Wölbung mit dem größten Radius über einen kleineren Kreiswinkel als die Wölbungen mit den kleineren Radien erstrecken.

9. Elastomerlager nach Anspruch 8, bei dem sich die Wölbung mit dem größten Radius über einen Kreiswinkel von etwa 120° und die Wölbungen mit den kleineren Radien über einen Kreiswinkel von etwa 180° erstrecken.

10. Elastomerlager nach Anspruch 9, bei dem die Verbindungspunkte der den größten Radius aufweisenden Wölbungen mit der benachbarten Deckschicht jeweils paarweise einen kleineren Abstand als die Verbindungspunkte der den kleineren Radius aufweisenden Wölbungen mit deren benachbarter Deckschicht aufweisen.

11. Elastomerlager nach einem der Ansprüche 1 bis 10, bei dem die Wandstärken der einzelnen Wölbungen unterschiedlich sind.

12. Elastomerlager nach einem der Ansprüche 1 bis 11, bei dem die Wandstärke der Federwände von der einen Deckschicht zur anderen Deckschicht hin abnimmt.

13. Elastomerlager nach einem der Ansprüche 1 bis 12, bei dem die Wandstärke der Federwände von den Deckschichten zur Mitte hin abnimmt.

14. Elastomerlager nach einem der Ansprüche 1 bis 13, bei dem die Wölbungen der Federwände so bemessen sind, dass unter zunehmender Belastung zunächst die Wölbungen mit dem kleinsten Radius, danach die Wölbungen mit dem nächst größeren Radius und schließlich die Wölbungen mit dem größten Radius bis zur Anlage verformt werden.

15. Verwendung des Elastomerlagers nach einem der Ansprüche 1 bis 14 zur Schwingungs- und Körperschallisolation und zur Entkopplung von Masse-Feder-Systemen für Maschinen, Gebäude, deren Teile, Brücken, Schienenfahrwege und andere Bauten.
